# EUROPÄISCHE PATENTSCHRIFT

(11) **EP 2 235 229 B1**
(45) Veröffentlichungstag und Bekanntmachung des Hinweises auf die Patenterteilung: **29.06.2016**
(21) Anmeldenummer: 09704868.0
(22) Anmeldetag: 21.01.2009
(51) Int. Cl.: C22C 38/04, C23C 2/02

(54) **VERFAHREN ZUM BESCHICHTEN EINES 6 - 30 GEW. % MN ENTHALTENDEN WARM- ODER KALTGEWALZTEN STAHLFLACHPRODUKTS MIT EINER METALLISCHEN SCHUTZSCHICHT**
METHOD FOR COATING A WARM OR COLD-ROLLED FLAT STEEL PRODUCT COMPRISING 6 - 30 WEIGHT-% MN WITH A METALLIC PROTECTIVE LAYER
PROCÉDÉ POUR APPLIQUER UNE COUCHE DE PROTECTION MÉTALLIQUE SUR UN PRODUIT PLAT EN ACIER LAMINÉ À CHAUD OU À FROID CONTENANT 6 - 30% EN POIDS DE MN

(30) Priorität: 22.01.2008 DE 102008005605
(43) Veröffentlichungstag der Anmeldung: 06.10.2010
(73) Patentinhaber: ThyssenKrupp Steel Europe AG, 47166 Duisburg (DE)
(72) Erfinder: MEURER, Manfred, 47495 Rheinberg (DE); LEUSCHNER, Ronny,, 01099 Dresden (DE); STEINHORST, Michael, 45357 Essen (DE)
(74) Vertreter: Cohausz & Florack
(86) Internationale Anmeldenummer: PCT/EP2009/050657
(87) Internationale Veröffentlichungsnummer: WO 2009/092733

(56) Entgegenhaltungen:
- WO-A1-2006/089832
- WO-A1-2009/084783
- DE-A1- 19 943 238
- JP-A- 3 061 352
- JP-A- 3 243 751
- JP-A- 6 136 578
- US-A- 5 677 005
- US-A- 5 810 950

## Beschreibung

Die Erfindung betrifft ein Verfahren zum Beschichten eines 6 - 30 Gew.-% Mn enthaltenden warm- oder kaltgewalzten Stahlflachprodukts mit einer metallischen Schutzschicht durch Schmelztauchbeschichten. Wenn hier von "Stahlflachprodukten" die Rede ist, dann sind damit Stahlbänder und -bleche oder vergleichbare Walzerzeugnisse gemeint.

Stähle mit hohen Mangan-Gehalten eignen sich auf Grund ihrer günstigen Eigenschaftskombination aus hohen Festigkeiten von bis zu 1400 MPa und extrem hohen Dehnungen (Gleichmaßdehnungen bis 70 % und Bruchdehnungen von 90 %) grundsätzlich im besonderen Maße für eine Verwendung im Bereich des Fahrzeugbaus, insbesondere im Automobilbau. Für diesen Einsatzzweck geeignete Stähle mit hohen Mn-Gehalten von 6 Gew.-% bis 30 Gew.-% sind beispielsweise aus der DE 102 59 230 A1, der DE 197 27 759 C2 oder der DE 199 00 199 A1 bekannt. Aus den bekannten Stählen erzeugte Flachprodukte weisen bei hohen Festigkeiten ein isotropes Verformungsverhalten auf und sind darüber hinaus auch bei tiefen Temperaturen noch duktil.

Diesen Vorteilen steht jedoch der Nachteil gegenüber, dass hochmanganhaltige Stähle zu Lochfraß neigen und nur schwer zu passivieren sind. Diese im Vergleich zu niedriger legierten Stählen bei Einwirken erhöhter Chloridionen-Konzentrationen große Neigung zu lokal zwar begrenzter, jedoch intensiver Korrosion macht die Verwendung von zur Werkstoffgruppe der hochlegierten Mn-Stahlbleche gehörenden Stählen gerade im Karosseriebau schwierig. Zudem neigen hochmanganhaltige Stähle zu Flächenkorrosion, die das Spektrum ihrer Verwendbarkeit ebenfalls einschränkt.

Auf Grund des technologischen Interesses an diesen Stählen, insbesondere in der Automobilindustrie, ist daher eine Passivierung der Stahloberfläche in Form eines kathodischen Korrosionsschutzes, beispielsweise durch Aufbringen eines metallischen Zink- oder zinkhaltigen Überzuges, unbedingt notwendig.

Um dem Problem der Korrosionsanfälligkeit zu begegnen ist daher vorgeschlagen worden, aus hochmanganhaltigen Stählen erzeugte Stahlflachprodukte wie eine große Zahl anderer für den Einsatz im Bereich des Automobilkarosseriebaus vorgesehener Stahlflachprodukte mit einer metallischen, vor korrosivem Angriff schützenden Schutzschicht zu überziehen.

Als für diesen Zweck geeignet hat sich das elektrolytische Zinkbeschichten herausgestellt. Allerdings ist dieser Weg des Auftrags einer Zinkbeschichtung verfahrenstechnisch relativ aufwändig. Hinzu besteht dabei die Gefahr, dass der Stahlwerkstoff Mengen an Wasserstoff aufnimmt, wodurch seine mechanischen Eigenschaften beeinträchtigt werden.

Im großtechnischen Umfeld preisgünstiger und verfahrenstechnisch einfacher lassen sich Stahlbänder oder -bleche durch Schmelztauchbeschichten mit einem metallischen Schutzüberzug versehen. Beim Schmelztauchbeschichten wird das jeweils zu beschichtende Flachprodukt auf eine bestimmte Badeintrittstemperatur erwärmt, mit der es dann in ein Schmelzenbad getaucht wird. Zur Einstellung der Schichtdicke des Schutzüberzugs wird anschließend überschüssiges Metall des Überzuges von dem Flachprodukt abgestreift. Abhängig von der Basis des jeweils verarbeiteten Überzugswerkstoffs wird das Schmelztauchbeschichten in der Praxis auch als "Feuerverzinken" oder "Feueraluminieren" bezeichnet.

Praktische Versuche, Stahlbänder mit hohen Mangangehalten durch Schmelztauchbeschichten mit einer metallischen Schutzschicht zu versehen, ergaben jedoch grundsätzliche Probleme bei der Benetzung der zu beschichtenden Produkte mit der Überzugsschmelze. Diese führten zu einer unzureichenden Haftung des Überzugs auf dem Stahlsubstrat mit der Folge, dass sich insbesondere bei der Kaltverformung derart beschichteter hochmanganhaltiger Bleche Risse und Abplatzungen des Überzugs einstellten.

Die aus dem Bereich von hochlegierten, jedoch niedrigere Mn-Gehalte aufweisenden Stählen bekannten Möglichkeiten der Verbesserung der Benetzbarkeit durch Aufbringen einer Zwischenschicht aus Fe oder Ni führten bei Stahlblechen mit mindestens 6 Gew.-% Mangan nicht zu dem gewünschten Erfolg.

In der DE 10 2005 008 410 B3 ist vorgeschlagen worden, auf ein 6 - 30 Gew.-% Mn enthaltendes Stahlband vor der dem Schmelztauchbeschichten vorangehenden letzten Glühung eine Aluminiumschicht aufzutragen. Das auf dem Stahlband haftende Aluminium verhindert bei der der Schmelzbeschichtung vorgeschalteten Glühung des Stahlbands, dass dessen Oberfläche oxidiert. Anschließend bewirkt die Aluminium-Schicht nach Art eines Haftvermittlers, dass der durch die Schmelzbeschichtung erzeugte Überzug auch dann fest und vollflächig auf dem Stahlband haftet, wenn das Stahlband selbst auf Grund seiner Legierung dazu ungünstige Voraussetzungen bietet. Dazu wird bei dem bekannten Verfahren der Effekt genutzt, dass es bei der der Schmelzbeschichtung notwendig vorgeschalteten Glühbehandlung zu einer Diffusion des Eisens des Stahlbands in die Aluminiumschicht kommt. Im Zuge der Glühung entsteht auf dem Stahlband somit eine metallische, im Wesentlichen aus A1 und Fe bestehende Auflage, die stoffschlüssig mit dem durch das Stahlband gebildeten Untergrund verbunden ist.

Ein anderes Verfahren zum Beschichten eines hochmanganhaltigen, 0,35 - 1,05 Gew.-% C, 16 - 25 Gew.-% Mn, Rest Eisen sowie unvermeidbare Verunreinigungen enthaltendes Stahlband ist aus der WO 2006/042931 A1 bekannt. Gemäß diesem bekannten Verfahren wird das derart zusammengesetzte Stahlband zunächst kaltgewalzt und anschließend rekristallisierend in einer Atmosphäre geglüht, die sich in Bezug auf Eisen reduzierend verhält. Dabei sind die Glühparameter so gewählt, dass sich auf dem Stahlband beidseitig eine Zwischenschicht einstellt, die im Wesentlichen vollständig aus amorphem Oxid (FeMn) O besteht, und sich zusätzlich eine äußere Schicht einstellt, die aus kristallinem Mn-Oxid besteht, wobei die Dicke der beiden Schichten mindestens 0,5 µm beträgt. Praktische Untersuchungen haben gezeigt, dass auch derart aufwändig vorbeschichtete Stahlbänder in der Praxis nicht die für eine Kaltverformung geforderte Haftung auf dem Stahlsubstrat aufweisen.

Neben dem voranstehend erläuterten Stand der Technik ist aus der JP 07-216524 A ein Verfahren zum Heißtauchbeschichten einer warmgewalzten Stahlplatte bekannt, die eine hohe Zugfestigkeit aufweist. Im Zuge dieses bekannten Verfahrens wird die Stahlplatte zunächst entzundert, gebeizt und gereinigt. Dann wird sie schwach oxidiert, um auf ihr einen Eisenoxidfilm zu erzeugen, der eine Dicke von 500 - 10.000 Å aufweist. Dieser Eisenoxidfilm wird anschließend durch reduzierendes Erhitzen zu aktivem metallischem Eisen reduziert. Die reduzierende Erhitzung wird dabei so durchgeführt, dass eine selektive Oxidation von Si und Mn in dem Stahl und eine Konzentrierung dieser Elemente an der Oberfläche vermieden werden. Zu diesem Zweck wird das reduzierende Erhitzen unter einer Atmosphäre durchgeführt, deren Wasserstoffkonzentration im Bereich von 3 - 25 Vol-% so reguliert wird, dass sie einerseits ein für die Reduzierung des Eisenoxids ausreichendes Reduktionsvermögen aufweist, andererseits jedoch die selektive Oxidation von Si und Mn unterbleibt.

Schließlich ist es aus der US 5,677,005 ein Verfahren zum Beschichten eines 0,5 - 2,0 Gew.-% Mn enthaltenden kaltgewalzten Stahlflachproduktes mit einer metallischen Schutzschicht durch Schmelztauchbeschichten bekannt, bei dem das Stahlflachprodukt vor seinem Eintritt in das Schmelzenbad einer Beizbehandlung unterzogen wird, um auf dem Stahlflachprodukt haftendes Manganoxid zu entfernen, wobei bei höheren Mn-, Si- oder Cr-Gehalten vorgeschlagen wird, das Beizen mit einer mechanischen Methode zum Entfernen des Oxids zu kombinieren. Das Beizbad kann in konventioneller Weise Salz- oder Schwefelsäure in ausreichend hoher Konzentration enthalten, wobei als typisches Beispiel eine Salzsäurekonzentration von 5 % genannt ist. Die Verweilzeit im Beizenbad beträgt bei dem bekannten Verfahren typischerweise 5 - 60 Sekunden.

Daneben ist es aus der US 5,810,950 bekannt, dass sich auch bei Stählen mit höheren Mn-Gehalten der auf ihnen haftende Oxidfilm durch ein Beizen in einer Salzsäurelösung entfernen lässt. Allerdings steht diese Maßnahme bei diesem Stand der Technik in keinem Zusammenhang mit einer anschließend erfolgenden Schmelztauchbeschichtung.

Trotz der zahlreichen im Stand der Technik zu findenden Vorschläge zur Verbesserung des Ergebnisses einer Schmelztauchbeschichtung zeigt die Praxis, dass sich auch damit nicht mit der für eine erfolgreiche und marktgerechte großtechnische Anwendung notwendigen verfahrenstechnischen Einfachheit und Produktionssicherheit Flachprodukte aus hoch Mn-haltigen Stählen erzeugen lassen, die mit einer den Anforderungen der Weiterverarbeiter entsprechenden Qualität gegen korrosive Angriffe geschützt sind.

Vor diesem Hintergrund bestand die Aufgabe der Erfindung darin, ein Verfahren anzugeben, mit dem sich mit erhöhter Produktivität und Produktionssicherheit zuverlässig aus Stählen mit hohen Mangangehalten bestehende Flachprodukte mit einer metallischen Schutzschicht beschichten lassen, die wirksam gegen korrosive Angriffe schützt.

Diese Aufgabe ist erfindungsgemäß durch das in Anspruch 1 angegebene Verfahren gelöst worden. Vorteilhafte Ausgestaltungen des erfindungsgemäßen Verfahrens sind in den auf Anspruch 1 rückbezogenen Ansprüchen genannt.

Gemäß der Erfindung wird zum Schmelztauchbeschichten das zu beschichtende 6 - 30 Gew.-% Mangan enthaltende zu beschichtende Stahlflachprodukt vor seinem Eintritt in das Schmelzenbad einer Beizbehandlung unterzogen, bei der auf dem Stahlband haftendes Manganoxid in einem Beizbad im Wesentlichen vollständig entfernt wird.

Dieser Lehre liegt die Erkenntnis zu Grunde, dass die beim Stand der Technik festgestellten schlechten Haftungseigenschaften in einer starken und kompakten Manganoxidschicht begründet sind, die sich bei der für das Schmelztauchbeschichten unverzichtbaren Glühung einstellt. Die im Zuge des Glühvorgangs oxidierten Blechoberflächen lassen sich nicht mehr mit der erforderlichen Gleichmäßigkeit und Vollständigkeit mit dem Überzugsmetall benetzen.

Dasselbe gilt, wenn ein aus einem Stahl mit hohem Mangangehalt von 6 Gew.-% und mehr erzeugtes Warmband ohne zuvor kaltgewalzt zu werden durch Schmelztauchen mit dem metallischen Schutzüberzug versehen werden soll. Auch auf diesem Warmband ist im Anlieferungszustand eine Oxidschicht vorhanden, die beim Stand der Technik eine zuverlässig gleichmäßige und dichte Benetzung des Stahlsubstrats verhindert.

Indem erfindungsgemäß das jeweils verarbeitete Stahlflachprodukt im letzten unmittelbar vor dem Eintritt in die Schmelztauchbeschichtungsanlage durchgeführten Arbeitsschritt so stark gebeizt wird, dass auf der Oberfläche des Flachproduktes vorhandenes Manganoxid entfernt wird, ist sichergestellt, dass das zu beschichtende Stahlflachprodukt mit einer Oberflächenbeschaffenheit in die Schmelztauchbeschichtung einläuft, die eine gleichmäßige und vollständige Benetzung seiner Oberfläche gewährleistet. Ziel des erfindungsgemäß durchgeführten Beizens ist die im Rahmen des technisch Machbaren möglichst vollständige Entfernung der Manganoxide, die vor dem Eintritt in die Beize auf dem jeweils verarbeiteten Flachprodukt noch vorhanden sind. Nach dieser erfindungsgemäß durchgeführten Entfernung der Manganoxide steht für die Schmelztauchreaktion eine konditionierte Stahloberfläche zu Verfügung, die sich nicht nur besonders gut benetzen lässt, sondern auch eine Haftung des Überzuges gewährleistet, die den beispielsweise bei einer Kaltverformung auftretenden Belastungen sicher standhält.

Im Fall, dass es sich bei dem zu beschichtenden Produkt um ein kaltgewalztes Stahlband oder -blech handelt, das vor der Schmelztauchbeschichtung einer rekristallisierenden Glühung unterzogen werden muss, findet der erfindungsgemäße Beizvorgang zwischen dem Austritt aus der jeweiligen Glüheinrichtung und dem Eintritt in die Schmelztauchanlage statt. Die rekristallisierende Glühung ist somit von der Schmelztauchbeschichtung entkoppelt. Dementsprechend kann die rekristallisierende Glühung unter Betriebsbedingungen durchgeführt werden, die im Hinblick auf das Glühergebnis und die Wirtschaftlichkeit des Glühprozesses optimiert sind. Eine komplexe Steuerung der Ofenatmosphäre zur Vermeidung von Oxidbildung kann so vermieden werden.

Besonders wirtschaftlich lässt sich das erfindungsgemäße Verfahren durchführen, wenn die Beizbehandlung im Durchlauf absolviert wird. Wird eine solche im Durchlauf erfolgende Beizbehandlung kombiniert mit einer ebenfalls im Durchlauf erfolgenden Schmelztauchbeschichtung, lässt sich die zeitliche Abfolge der Arbeitsschritte auf einfache Weise so aufeinander abstimmen, dass die Gefahr einer Neubildung von Manganoxid auf der Oberfläche des jeweils zu beschichtenden Stahlflachprodukts beim Übergang von der Beizeinrichtung in die Schmelztauchbeschichtungsanlage auf ein Minimum reduziert ist. Im Fall, dass das zu verarbeitende Flachprodukt vor seiner Beschichtung einer Glühung unterzogen wird, erweist es sich darüber hinaus im Hinblick auf die Produktivität des Gesamtverfahrens als günstig, wenn auch die Glüheinrichtung mit der Beizeinrichtung und der Schmelztauchbeschichtungsanlage in Linie stehend in einer kontinuierlichen Abfolge durchlaufen werden.

Für das Beizen wird erfindungsgemäß eine wässrige Lösung verwendet, die 20 - 200 g HCl/l enthält. Optional kann das Beizbad einen zusätzlichen Gehalt an 10 - 200 g/l Fe aufweisen. Neben wässrigen Lösungen von Salzsäure eignet sich beispielsweise auch eine wässrige Lösung von Schwefelsäure als Beizflüssigkeit für den Abtrag der Mangan-Oxide. Bei Säurekonzentrationen, die in den genannten Bereichen liegen, stellt sich die erfindungsgemäß angestrebte weitestgehend vollständige Entfernung der Manganoxide bei einer Verweilzeit des Stahlflachprodukts in dem Beizbad ein, die 5 - 60 Sekunden pro Längeneinheit des Stahlbands beträgt. Dabei ergeben sich besonders gute Beizergebnisse, wenn die Temperatur des Beizbades 40 - 90 °C beträgt.

Die hohe Produktivität und Wirtschaftlichkeit des erfindungsgemäßen Verfahrens wird erfindungsgemäß dadurch erreicht, dass das Stahlflachprodukt im Zuge der Beizbehandlung mindestens zwei Beizebädern ausgesetzt wird. So kann das zuerst durchlaufene Beizbad dazu genutzt werden, grobe Oxidansammlungen von der Oberfläche des jeweils behandelten Stahlsubstrats zu lösen, während in dem zweiten und den folgenden Bändern die dann jeweils noch vorhandenen feineren Oxidreste beseitigt werden. Um dies mit einer hohen Wirksamkeit zu erreichen, kann die Säurekonzentration des zweiten Beizbades höher eingestellt werden als die Säurekonzentration des ersten Beizbades. Ein weiterer Vorteil der Verwendung von zwei oder mehr Beizebäder mit von Bad zu Bad ansteigender Säurekonzentration besteht darin, dass die verbrauchte Beize des jeweils als letztes durchlaufenen Beizbeckens zur Vorreinigung des Stahlbandes zu Beginn der Beizbehandlung genutzt werden kann. Auf diese Weise kann die Wirtschaftlichkeit der gesamten Beizbehandlung verbessert werden. Bei mehreren Beizebädern liegen deren Säurekonzentrationen und Temperaturen sowie die Verweilzeiten, die das Stahlflachprodukt pro Längeneinheit in dem jeweiligen Bad verbringt, jeweils in dem voranstehend allgemein angegebenen Rahmen.

Eine für die Praxis besonders wichtige Ausgestaltung der Erfindung ist dadurch gekennzeichnet, dass das Stahlflachprodukt vor seinem Eintritt in das Schmelzenbad getrocknet wird. Auf diese Weise wird verhindert, dass Beizflüssigkeit in die Schmelztauchbeschichtungsanlage gelangt und dort das Ergebnis der Schmelztauchbeschichtung negativ beeinflusst.

Sofern dies erforderlich ist, wird auch im Rahmen des erfindungsgemäßen Verfahrens das aus der Beize austretende Flachprodukt vor seinem Eintritt in das Schmelzenbad auf eine Badeintrittstemperatur erwärmt, die für ein optimales Ergebnis der Schmelztauchbeschichtung benötigt wird. Die Erwärmung kann dabei so durchgeführt werden, dass die jeweils erforderliche Badeintrittstemperatur direkt angesteuert wird. Um eine ordnungsgemäße Durchwärmung des jeweils verarbeiteten Stahlflachproduktes zu gewährleisten, kann es jedoch auch zweckmäßig sein, das Stahlflachprodukt zunächst auf eine oberhalb der Badeintrittstemperatur liegende Erwärmungsspitzentemperatur zu erwärmen, es dort erforderlichenfalls für eine gewisse Zeit zu halten und es dann abzukühlen auf die jeweils erforderliche Badeintrittstemperatur.

Um zu verhindern, dass es im Zuge der Erwärmung des Stahlflachprodukts vor seinem Eintritt in das Schmelzenbad der Schmelztauchbeschichtung erneut zu einer das Beschichtungsergebnis beeinträchtigenden Oxidbildung kommt, sollte die Oberflächentemperatur während des Erwärmens 700 °C nicht überschreiten. Der für die praktische Anwendung bevorzugte Temperaturbereich der Erwärmung beträgt 350 - 700 °C, insbesondere 450 - 700 °C, wobei typischerweise Eintrittstemperaturen von 500 - 600 °C gewählt werden. Die Haltezeit, über die das Stahlflachprodukt für seine Durcherwärmung bei der oberhalb der Badeintrittstemperatur liegenden Erwärmungsspitzentemperatur pro Längeneinheit gehalten wird, liegt typischerweise im Bereich von 1 - 30 Sekunden.

Der Gefahr der Bildung von Oxid kann darüber hinaus dadurch begegnet werden, dass die Erwärmung auf die Eintrittstemperatur unter einer die Oberfläche des Stahlflachprodukts vor Oxidation schützenden Schutzatmosphäre erfolgt. Eine zu diesem Zweck geeignete Schutzgasatmosphäre besteht aus Stickstoff und bis zu 30 Vol.-%, insbesondere 5 - 30 Vol.-%, Wasserstoff. Um das oxidierende Potenzial der Atmosphäre in dem für die Erwärmung eingesetzten Ofen möglichst gering zu halten, ist es darüber hinaus günstig, den Taupunkt der Schutzgasatmosphäre während der Erwärmung des zu beschichtenden Stahlflachproduktes im Bereich von -80 - 0°C, insbesondere -50 °C bis -15 °C, zu halten.

Die auf das erfindungsgemäße Beizen folgende Schmelztauchbeschichtung kann beispielsweise als Feuerverzinkung oder als Feueraluminierung ausgeführt werden.

Das erfindungsgemäße Verfahren eignet sich zum Schmelztauchbeschichten von hochmanganhaltigen Stahlbändern mit einer im Wesentlichen vollständig aus Zn und unvermeidbaren Verunreinigungen bestehenden Schicht (so genannte "Z-Beschichtung"). Diese Schicht kann zusätzlich (in Gew.-%) 0,3 - 0,8 % Al und bis zu 0,7 % Fe enthalten.

Des Weiteren ist es möglich, mit dem erfindungsgemäßen Verfahren ein mindestens 6 % Mn enthaltendes Stahlsubstrat mit einer Zink-Eisen-Schicht schmelztauchzubeschichten, die (in Gew.-%) aus bis zu 92 % Zn und bis zu 12 % Fe besteht (so genannte "ZF-Beschichtung"). Typischerweise liegt der Fe- Gehalt einer solchen Beschichtung im Bereich von 8 - 12 Gew.-%, wobei zusätzlich 0,1 - 0,3 Gew.-% Al vorhanden sein können.

Auch ist es möglich, in erfindungsgemäßer Weise ein hochmanganhaltiges Stahlflachprodukt durch Schmelztauchbeschichten mit einem so genannten "ZA-Überzug" zu versehen, der neben Zink und unvermeidbaren Verunreinigungen bis zu 5 Gew.-% Al enthält sowie bis 0,05 Gew.-% Cer oder Lanthan aufweisen kann.

Das erfindungsgemäße Verfahren eignet sich darüber hinaus dazu, auf ein Stahlflachprodukt mit einem Mn-Gehalt von mindestens 6 Gew.-% eine Aluminium-Zink-Schicht durch Schmelztauchbeschichten aufzutragen, deren Al-Gehalt bis zu 60 Gew.-% und deren Zn-Gehalt bis zu 50 Gew.-% (so genannte "AZ-Beschichtung") beträgt, wobei zusätzlich bis zu 2 Gew.-% Si vorhanden sein können. Eine typische Zusammensetzung einer solchen AZ-Beschichtung weist einen Al-Gehalt von 55 Gew.-%, einen Zn-Gehalt von 43,4 Gew.-% und einen Si-Gehalt von 1,6 Gew.-% auf.

Ebenso kann ein hochmanganhaltiges Stahlflachprodukt in erfindungsgemäßer Weise mit einer Aluminium-Silizium-Schicht schmelztauchbeschichtet werden, die einen Al-Gehalt von bis zu 92 Gew.-% und einen Si-Gehalt von bis zu 12 Gew.-% aufweist (so genannte "AS-Beschichtung"). Typischerweise weist eine solche AS-Beschichtung in der Praxis neben Aluminium und unvermeidbaren Verunreinigungen einen Si-Gehalt von 8 - 11 Gew.-% auf.

Schließlich besteht im Rahmen der Erfindung auch die Möglichkeit, ein hochmanganhaltiges Stahlsubstrat mit einer Zink-Magnesium-Schicht (so genannte "ZnMg-Beschichtung") schmelztauchzubeschichten, die einen Mg-Anteil von bis zu 5 Gew.-%, tpyischerweise 0,25 - 2,5 Gew.-% Mg, besitzt sowie zusätzlich wahlweise bis zu 11 Gew.-% Al, typischerweise 0,2 - 3,0 Gew.-% Al, bis zu 4 Gew.-% Fe und bis zu 2 Gew.-% Si sowie in Summe bis zu 0,8 Gew.-% eines oder mehrerer Elemente aus der Gruppe "Pb, Bi, Cd, B, Ti, Si, Cu, Ni, Co, Cr, Mn, Sn, Seltene Erden" und als Rest Zn sowie unvermeidbare Verunreinigungen enthält.

Im Fall, dass ein im Wesentlichen auf Al basierender Überzug, also beispielsweise ein AZ- oder AS-Überzug, in erfindungsgemäßer Weise aufgebracht worden ist kann es im Hinblick auf eine Optimierung der kathodischen Schutzwirkung der Beschichtung zweckmäßig sein, auf die Al-basierte, unmittelbar auf dem jeweiligen Stahlsubstrat aufliegende Schicht zusätzlich eine Zinkschicht aufzutragen. Dies kann beispielsweise dadurch geschehen, dass auf die durch Feueraluminieren erhaltene Schicht durch elektrolytisches Beschichten, erneutes Eintauchen in ein Zn-Bad oder Abscheiden aus der Gasphase (z. B. durch ein PVD-Verfahren) die Zinkschicht aufgebracht wird. (Unter "PVD" wird ein Beschichtungsverfahren verstanden, bei dem die jeweiligen Metalle oder chemischen Verbindungen durch Zufuhr thermischer Energie oder durch Teilchenbeschuss im Hochvakuum auf der zu beschichtenden Oberfläche der Kernlage abgeschieden werden. Das Beschichtungsmaterial wird dazu aus einem Feststoff in die Dampfphase überführt und kondensiert anschließend auf der jeweiligen Oberfläche. Zu den PVD-Verfahren zählen auch das Ionenplattieren und Kathodenzerstäubung (Sputtering).)

Ein erstes Beispiel für die hochlegierten Stahlwerkstoffe, aus denen in erfindungsgemäßer Weise mit einer vor Korrosion schützenden Beschichtung zu versehende Stahlflachprodukte bestehen, ist ein Stahl, der (in Gew.-%) C: ≤ 1,6 %, Mn: 6 - 30 %, Al: ≤ 10 %, Ni: ≤ 10 %, Cr: ≤ 10 %, Si: ≤ 8 %, Cu: ≤ 3 %, Nb: ≤ 0,6 %, Ti: ≤ 0,3%, V: ≤ 0,3 %, P: ≤ 0,1 %, B: ≤ 0,01 %, N: ≤ 1,0 %, Rest Eisen und unvermeidbare Verunreinigungen enthält.

Besonders vorteilhaft wirken sich die durch die Erfindung erzielten Effekte bei der Beschichtung von Stahlbändern aus, die Mangan-Gehalte von mindestens 15 Gew.-% aufweisen. Ein zu dieser Klasse zählendes Stahlflachprodukt weist (in Gew.-%) C: ≤ 1,00 %, Mn: 20,0 - 30,0 %, Al: ≤ 0,5 %, Si: ≤ 0,5 %, B: ≤ 0,01 %, Ni: ≤ 3,0 %, Cr: ≤ 10,0 %, Cu: ≤ 3,0 %, N: < 0, 6 %, Nb: < 0, 3 %, Ti: < 0,3 %, V: < 0,3 %, P: < 0,1 %, Rest Eisen und unvermeidbare Verunreinigungen auf.

Bei Anwendung des erfindungsgemäßen Verfahrens besonders gute Beschichtungsergebnisse ergeben sich auch bei solchen Stahlflachprodukten, die (in Gew.-%) C: ≤ 1,00 %, Mn: 7,00 - 30,00 %, Al : 1,00 - 10,00 %, Si: >2,50 - 8,00 % (wobei gilt, dass die Summe aus Al-Gehalt und Si-Gehalt >3,50 - 12,00 % ist), B: < 0,01 %, Ni: < 8,00 %, Cu: < 3,00 %, N: < 0,60 %, Nb: < 0,30 %, Ti: < 0,30 %, V: < 0,30 %, P: < 0,01 %, Rest Eisen und unvermeidbare Verunreinigungen enthalten.

Mit der Erfindung steht somit ein kostengünstiger Weg zur Verfügung, hochmanganhaltige Stahlbänder auf wirtschaftliche Weise so gegen Korrosion zu schützen, dass sie für die Produktion von Karosserien für den Fahrzeugbau, insbesondere den Automobilbau, eingesetzt werden können, bei deren praktischem Einsatz sie besonders korrosiven Medien ausgesetzt sind.

Nachfolgend wird die Erfindung anhand von Ausführungsbeispielen erläutert. Die einzige Figur zeigt eine vergrößerte Aufnahme einer Probe eines in erfindungsgemäßer Weise mit einem Zinküberzug versehenen Stahlblechs nach einem Kugelschlagtest.

Zum Nachweis der Wirksamkeit der Erfindung wurden verschiedene Versuche durchgeführt.

Für die nachfolgend erläuterten Versuche ist aus einem hochmanganhaltigen Stahl, der neben Eisen und unvermeidbaren Verunreinigungen (in Gew.-%) 0,6 % C, 22,7 Gew.-% Mn, 0,18 % Si, 0,2 % V, 0,01 % Al, 0,08 % Cr, 0,02 % P, 0,001 % Ti und 0,001 % Nb enthielt, in konventioneller Weise ein Warmband erzeugt worden, das anschließend in ebenso konventioneller Weise zu einem Kaltband kaltgewalzt worden ist.

Das so erhaltene Kaltband ist dann unter einer Glühatmosphäre, bestehend aus 95 Vol. % % Stickstoff und 5 Vol. % Wasserstoff bei einer Temperatur von 830°C mit einer Bandgeschwindigkeit von 100 m/min im kontinuierlichen Durchlauf rekristallisierend geglüht worden. Der Taupunkt der Glühatmosphäre ist dabei auf -30°C gehalten worden.

Für die anschließend in den nachfolgend im Einzelnen erläuterten Versuchsreihen durchgeführten Beizbehandlungen lassen sich in der Praxis beispielsweise zwei konventionelle, im kontinuierlichen Durchlauf durchlaufene Beizbecken von jeweils 30 m Länge verwenden. Abhängig von der Geschwindigkeit, mit der das jeweils zu behandelnde Stahlband durch die Beizbecken geleitet wird, lässt sich dann die jeweilige Verweilzeit / pro Längeneinheit des Stahlbands einstellen. So ergibt sich beispielsweise bei einer Bandgeschwindigkeit von 90 m/min für jedes Beizbecken eine Verweilzeit von 20 Sekunden pro Längeneinheit des betreffenden Stahlbands

In einer ersten Versuchsreihe ist das in der oben beschriebenen Weise erzeugte und rekristallisierend geglühte Stahlband einer zwei-stufig durchgeführten Beizbehandlung unterzogen worden, bei der es für jeweils 20 Sekunden pro Längeneinheit aufeinanderfolgend durch zwei Beizebäder geleitet worden ist. Das erste der Beizebäder enthielt Salzsäure in einer Konzentration von 73 g HCl/l, während die Salzsäurekonzentration des zweiten Bades 120 g HCl/l betrug.

Bei Austritt aus dem zweiten Beizbad war die Oberfläche der untersuchten Probe von der zuvor auf ihr haftenden Oxidschicht befreit.

Unmittelbar nach dem Verlassen des Beizbades wurde das Stahlband mit Wasser gespült, um anhaftende Säure zu entfernen und den Beizprozess zu beenden. Anschließend erfolgte eine Trocknung der Stahloberfläche durch Abblasen der dort verbliebenen Flüssigkeit.

Zum Erwärmen auf die geforderte Badeintrittstemperatur ist das getrocknete Stahlband im nächsten Schritt unter einer 10 Vol. % Wasserstoff enthaltenden Stickstoff-Wasserstoff-Schutzatmosphäre bei einem Taupunkt von -30 °C zunächst auf eine Oberflachentemperatur von 600 °C erhitzt und für 7 Sekunden auf dieser Temperatur gehalten worden. Nach dem anschließenden Abkühlen auf eine Badeintrittstemperatur von 470 °C erfolgte das Eintauchen in ein schmelzflüssiges Zinkbad, das neben Zink und unvermeidbaren Verunreinigungen 0,22 Gew.-% Al enthielt.

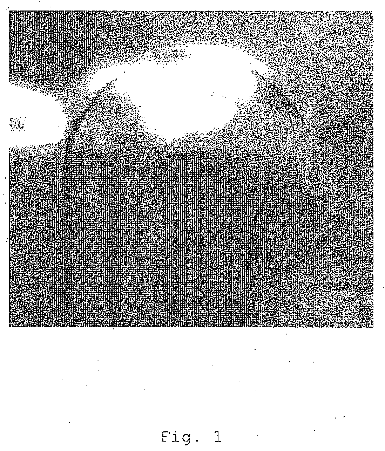

Anschließend ist an einer Probe des auf diese Weise verzinkten Stahlbands ein Kugelschlagtest durchgeführt worden. Die einwandfreie Haftung des Überzugs auch im am stärksten verformten Bereich der in das Stahlblech eingeformten Kalotte ist in Fig. 1 deutlich zu erkennen.

In fünf weiteren Versuchen der ersten Versuchsreihe sind ausgehend von den voranstehend für die erste Versuchsreihe erläuterten Versuchsbedingungen zunächst die Verweilzeiten "Verweilzeit Beize 1" und "Verweilzeit Beize 2" in den Beizebädern variiert worden, wobei die Erwärmungsspitzentemperatur bei der nachfolgenden Erwärmung auf die Badeintrittstemperatur jeweils bei 550 °C lag. Die Benetzbarkeit des Stahlblechs sowie die Haftung des Überzugs sind anschließend bewertet worden. Das Ergebnis dieser Bewertung ist in Tabelle 1 zusammengefasst. Es zeigt sich, dass bei einer Verweildauer von mindestens 20 Sekunden pro Längeneinheit in jedem Beizbad und damit einhergehend zunehmend vollständiger Entfernung der Oxidschicht eine optimale Haftung gewährleistet werden kann.

Anschließend sind ebenfalls basierend auf den oben erläuterten Versuchsbedingungen in 27 weiteren Versuchen bei konstanten Verweilzeiten von jeweils 20 s/Längeneinheit in den beiden Beizebädern die bei der Erwärmung auf die Badeintrittstemperatur erreichten Erwärmungsspitzentemperaturen und die Haltezeiten variiert worden, über die das Stahlband bei diesen Erwärmungsspitzentemperaturen gehalten worden ist. Auch bei diesen Versuchen ist dann das Benetzungsverhalten des Stahlbands und die Haftung des auf ihm erzeugten Überzugs beurteilt worden. Die Ergebnisse dieser Versuche sind in Tabelle 2 zusammengefasst. Daraus ist ersichtlich, dass bei im Bereich von 400 °C bis 650 °C liegenden Erwärmungsspitzentemperaturen Haltezeiten von weniger als 50 Sekunden einen positiven Effekt auf die Benetzbarkeit und das Haftvermögen haben, während sehr niedrige oder sehr hohe Erwärmungsspitzentemperaturen sowie Haltezeiten von 50 Sekunden und mehr sich negativ auf die Benetzbarkeit und die Haftung auswirken.

Für einen zweiten Versuch ist ein kaltgewalztes und rekristallisierend geglühtes Stahlband in derselben Weise erzeugt worden, wie für den ersten Versuch beschrieben. Im Zuge des zweiten Versuchs ist auch dieses Stahlband durch Eintauchen in ein Salzsäurebad von der Manganoxidschicht befreit worden. Hierzu sind sequentiell zwei Beizebäder unterschiedlicher Konzentration verwendet worden. Das erste Beizbad enthielt wiederum 73 g HCl/l während das zweite Beizbad 120 g HCl/l aufwies. Die Verweilzeit lag in jedem Beizbad bei 20 Sekunden pro Längeneinheit des Stahlbands.

Unmittelbar nach dem Verlassen des letzten Beizbades ist das Stahlband mit Wasser gespült worden, um anhaftende Säure zu entfernen und den Beizprozess zu beenden. Anschließend erfolgte eine Trocknung der Stahloberfläche. Zum Erwärmen auf die erforderliche Badeintrittstemperatur ist das Stahlband im nächsten Schritt in einer 10 Vol. % Wasserstoff enthaltenden Stickstoff/Wasserstoffatmosphäre bei einem Taupunkt von -30 °C auf eine Oberflächentemperatur von 700 °C erhitzt und 7 Sekunden auf dieser Temperatur gehalten worden.

Nach Abkühlen auf die Badeintrittstemperatur von 670 °C ist das Stahlband dann in ein schmelzflüssiges Aluminiumbad eingetaucht worden, das 90 Gew.-% Al und 10 Gew.-% Si enthielt.

Wie bei der ersten Versuchsreihe sind in fünf weiteren Versuchen der zweiten Versuchsreihe ausgehend von den voranstehend für die zweite Versuchsreihe erläuterten Versuchsbedingungen zunächst die Verweilzeiten "Verweilzeit Beize 1" und "Verweilzeit Beize 2" in den Beizebädern variiert worden, wobei hier die Erwärmungsspitzentemperatur bei der nachfolgenden Erwärmung auf die Badeintrittstemperatur jeweils bei 700 °C lag. Die Benetzbarkeit des Stahlblechs sowie die Haftung des Überzugs sind anschließend bewertet worden. Das Ergebnis dieser Bewertung ist in Tabelle 3 zusammengefasst. Es ergibt sich auch in diesem Fall, dass bei einer Verweildauer von mindestens 20 Sekunden pro Längeneinheit in jedem Beizbad und damit einhergehend zunehmend vollständiger Entfernung der Oxidschicht eine optimale Haftung der durch Feueraluminieren erhaltenen Überzugsschicht gewährleistet werden kann.

Anschließend sind ebenfalls wie bei der Versuchsreihe 1 basierend auf den zur zweiten Versuchsreihe oben erläuterten Versuchsbedingungen in 18 weiteren Versuchen bei konstanten Verweilzeiten von jeweils 20 s/Längeneinheit in den beiden Beizebädern die bei der Erwärmung auf die Badeintrittstemperatur erreichten Erwärmungsspitzentemperaturen und die Haltezeiten variiert worden, über die das Stahlband bei diesen Erwärmungsspitzentemperaturen gehalten worden ist. Auch bei diesen Versuchen ist dann das Benetzungsverhalten des Stahlbands und die Haftung des auf ihm erzeugten Überzugs beurteilt worden. Die Ergebnisse dieser Versuche sind in Tabelle 2 zusammengefasst. Daraus ist ersichtlich, dass bei im Bereich von 600 °C bis 700 °C liegenden Erwärmungsspitzentemperaturen die Haltezeit keinen wesentlichen Einfluss auf die Benetzbarkeit und das Haftvermögen hat, während bei deutlich niedrigeren oder deutlich höheren Erwärmungsspitzentemperaturen die Benetzbarkeit und die Haftung abnimmt. Das beste Ergebnis liefert eine Erwärmungsspitzentemperatur von 700 °C bei einer Haltezeit von 7 Sekunden.

In einer dritten Versuchsreihe ist ein entsprechend dem allgemeinen Versuch der zweiten Versuchsreihe feueraluminiertes Stahlband mit einer elektrolytisch aufgebrachten Zinkauflage versehen worden. Hierzu wurde die zuvor in erfindungsgemäßer Weise aufgetragene Aluminiumauflage zunächst alkalisch gereinigt und in einem 40°C warmen Beizbad, das durch eine wässrige HCl-Lösung (80 g/l HCl) gebildet war, in 10 Sekunden vorbehandelt. Anschließend ist auf die so vorbehandelte Aluminiumschicht in einer Elektrolysezelle mit Hilfe eines Zinksulfatelektrolyten eine 6 µm dicke Zinkschicht abgeschieden worden.

**Tabelle 1**

| Lfd. Nr. | Verweilzeit Beize 1 [s] | Verweilzeit Beize 2 [s] | Erwärmungsspitzentemperatur [°C] | Benetzung (') | Haftung (**) |
|---|---|---|---|---|---|
| 1 | 10 | 10 | 550 | 2 | 2 |
| 2 | 20 | 20 | 550 | 1 | 1 |
| 3 | 30 | 30 | 550 | 1 | 1 |
| 4 | 40 | 40 | 550 | 1 | 1 |
| 5 | 50 | 50 | 550 | 1 | 1 |

| | | | | | |
|---|---|---|---|---|---|
| (*) Benetzungsbewertung: 1=keine unbenetzten Stellen; 2=einzelne unbenetzte Stellen; 3=zahlreiche unbenetzte Stellen. (**)Haftung gemäß SEP 1931: 1=keine Risse 2=feine Risse 3=Risse, feine Abblätterungen 4=starke Abblätterungen | | | | | |

**Tabelle 2**

| Lfd. Nr. | Erwärmungspitzentemperatur [°C] | Haltezeit [s] | Verweilzeit Beize 1. [s] | Verweilzeit Beize 2 [s] | Benetzung (*) | Haftung (**) |
|---|---|---|---|---|---|---|
| 1 | 400 | 7 | 20 | 20 | 2 | 1 |
| 2 | 400 | 30 | 20 | 20 | 2 | 2 |
| 3 | 400 | 50 | 20 | 20 | 2 | 2 |
| 4 | 450 | 7 | 20 | 20 | 2 | 2 |
| 5 | 450 | 30 | 20 | 20 | 2 | 2 |
| 6 | 450 | 50 | 20 | 20 | 2 | 2 |
| 7 | 500 | 7 | 20 | 20 | 1 | 1 |
| 8 | 500 | 30 | 20 | 20 | 1 | 1 |
| 9 | 500 | 50 | 20 | 20 | 2 | 2 |
| 10 | 550 | 7 | 20 | 20 | 1 | 1 |
| 11 | 550 | 30 | 20 | 20 | 1 | 1 |
| 12 | 550 | 50 | 20 | 20 | 2 | 2 |
| 13 | 600 | 7 | 20 | 20 | 1 | 1 |
| 14 | 600 | 30 | 20 | 20 | 1 | 1 |
| 15 | 600 | 50 | 20 | 20 | 2 | 2 |
| 16 | 650 | 7 | 20 | 20 | 1 | 1 |
| 17 | 650 | 30 | 20 | 20 | 2 | 2 |
| 18 | 650 | 50 | 20 | 20 | 3 | 3 |
| 19 | 700 | 7 | 20 | 20 | 2 | 3 |
| 20 | 700 | 30 | 20 | 20 | 3 | 3 |
| 21 | 700 | 50 | 20 | 20 | 3 | 9 |
| 22 | 750 | 7 | 20 | 20 | 3 | 4 |
| 23 | 750 | 30 | 20 | 20 | 3 | 4 |
| 24 | 750 | 50 | 20 | 20 | 3 | 4 |
| 25 | 800 | 7 | 20 | 20 | 3 | 4 |
| 26 | 800 | 30 | 20 | 20 | 3 | 4 |
| 27 | 800 | 50 | 20 | 20 | 3 | 4 |

| | | | | | | |
|---|---|---|---|---|---|---|
| (*) Benetzungsbewertung: 1=keine unbenetzte Stellen; 2=einzelne unbenetzte Stellen; 3=zahlreiche unbenetzte Stellen. (**) Haftung gemäß SEP 1931: 1=keine Risse 2=feine Risse 3=Risse, feine Abblätterungen 4=starke Abblätterungen | | | | | | |

**Tabelle 3**

| Lfd. Nr. | Verweilzeit Beize 1 [s] | Verweilzeit Beize 2 [s] | Erwärmungspitzentemperature [°C] | Benetzung (*) | Haftung (**) |
|---|---|---|---|---|---|
| 1 | 10 | 10 | 700 | 2 | 2 |
| 2 | 20 | 20 | 700 | 1 | 1 |
| 3 | 30 | 30 | 700 | 1 | 1 |
| 4 | 40 | 40 | 700 | 1 | 1 |
| 5 | 50 | 50 | 700 | 1 | 1 |

| | | | | | |
|---|---|---|---|---|---|
| (*) Benetzungsbewertung: 1=keine unbenetzten Stellen; 2=einzelne unbenetzte Stellen; 3=zahlreiche unbenetzte Stellen. (**) Haftung gemäß SEP 1937: 1=keine Risse 2=feine Risse 3=Risse, feine Abblätterungen 4=starke Abblätterungen | | | | | |

**Tabelle 4**

| Lfd. Nr. | Erwärmungspitzentemperatur [°C] | Haltezeit [s] | Verweilzeit Beize 1 [s] | Verweilzeit Beize 2 [s] | Benetzung (*) | Haftung (**) |
|---|---|---|---|---|---|---|
| 1 | 550 | 7 | 20 | 20 | 3 | 4 |
| 2 | 550 | 30 | 20 | 20 | 3 | 4 |
| 3 | 550 | 50 | 20 | 20 | 3 | 4 |
| 4 | 600 | 7 | 20 | 20 | 2 | 2 |
| 5 | 600 | 30 | 20 | 20 | 2 | 2 |
| 6 | 600 | 50 | 20 | 20 | 2 | 2 |
| 7 | 660 | 7 | 20 | 20 | 2 | 2 |
| 8 | 650 | 30 | 20 | 20 | 2 | 2 |
| 9 | 650 | 50 | 20 | 20 | 2 | 2 |
| 10 | 700 | 7 | 20 | 20 | 1 | 1 |
| 11 | 700 | 30 | 20 | 20 | 2 | 2 |
| 12 | 700 | 50 | 20 | 20 | 2 | 2 |
| 13 | 750 | 7 | 20 | 20 | 3 | 2 |
| 14 | 750 | 30 | 20 | 20 | 3 | 3 |
| 15 | 750 | 50 | 20 | 20 | 3 | 4 |
| 16 | 800 | 7 | 20 | 20 | 3 | 4 |
| 17 | 800 | 30 | 20 | 20 | 3 | 4 |
| 18 | 800 | 50 | 20 | 20 | 3 | 4 |

| | | | | | | |
|---|---|---|---|---|---|---|
| (*) Benetzungsbewertung: 1=keine unbenetzten Stellen; 2=einzelne unbenetzte Stellen; 3=zahlreiche unbenetzte Stellen. (**)Haftung gemäß SEP 1931: 1=keine Risse 2=feine Risse 3=Risse, feine Abblätterungen 4=starke Abblätterungen | | | | | | |

## Patentansprüche

1. Verfahren zum Beschichten eines 6 - 30 Gew.-% Mn enthaltenden warm- oder kaltgewalzten Stahlflachprodukts mit einer metallischen Schutzschicht durch Schmelztauchbeschichtung in einem Schmelzenbad, wobei das Stahlflachprodukt vor seinem Eintritt in das Schmelzenbad einer Beizbehandlung unterzogen wird, bei der das Stahlflachprodukt mindestens zwei Beizbädern ausgesetzt wird, und wobei die Beizbäder jeweils 20 - 200 g/l Salzsäure sowie optional 10 - 200 g/l Fe enthalten, **dadurch**
**gekennzeichnet, dass** die Säurekonzentration des zweiten Beizbades höher ist als die Säurekonzentration des ersten Beizbades.

2. Verfahren nach Anspruch 1, **dadurch gekennzeichnet, dass** die Beizbehandlung im Durchlauf absolviert wird.

3. Verfahren nach Anspruch 2, **dadurch gekennzeichnet, dass** die Verweilzeit des Stahlflachprodukts in dem Beizbad 5 - 60 Sekunden pro Längeneinheit beträgt.

4. Verfahren nach einem der voranstehenden Ansprüche, **dadurch gekennzeichnet, dass** die Temperatur des Beizbades 40 - 90 °C beträgt.

5. Verfahren nach einem der voranstehenden Ansprüche, **dadurch gekennzeichnet, dass** das Stahlflachprodukt vor seinem Eintritt in das Schmelzenbad getrocknet wird.

6. Verfahren nach einem der voranstehenden Ansprüche, **dadurch gekennzeichnet, dass** das Stahlflachprodukt vor seinem Eintritt in das Schmelzenbad auf eine Badeintrittstemperatur erwärmt wird.

7. Verfahren nach Anspruch 6, **dadurch**
**gekennzeichnet, dass** das Stahlflachprodukt bei der Erwärmung auf die Badeintrittstemperatur zunächst auf eine Erwärmungsspitzentemperatur aufgeheizt wird, die oberhalb der Badeintrittstemperatur liegt, und anschließend von der Erwärmungsspitzentemperatur auf die Badeintrittstemperatur abgekühlt wird.

8. Verfahren nach Anspruch 7, **dadurch**
**gekennzeichnet, dass** die Oberflächentemperatur während des Erwärmens 700 °C nicht überschreitet.

9. Verfahren nach einem der voranstehenden Ansprüche, **dadurch gekennzeichnet, dass** die Erwärmung auf die Badeintrittstemperatur unter einer die Oberfläche des Stahlflachprodukts vor Oxidation schützenden Schutzatmosphäre erfolgt.

10. Verfahren nach Anspruch 9, **dadurch**
**gekennzeichnet, dass** die Schutzatmosphäre aus Stickstoff und 5 - 30 Vol.-% Wasserstoff gebildet ist.

11. Verfahren nach Anspruch 10, **dadurch**
**gekennzeichnet, dass** der Taupunkt der Schutzatmosphäre -50 °C bis -15 °C beträgt.

12. Verfahren nach einem der voranstehenden Ansprüche, **dadurch gekennzeichnet, dass** das Stahlflachprodukt kaltgewalzt ist und vor der Beizbehandlung einem rekristallisierenden Glühen unterzogen wird.

13. Verfahren nach einem der voranstehenden Ansprüche, **dadurch gekennzeichnet, dass** die Schmelztauchbeschichtung als Feuerverzinkung ausgeführt wird.

14. Verfahren nach einem der Ansprüche 1 bis 12,
**dadurch gekennzeichnet, dass** die Schmelztauchbeschichtung als Feueraluminierung ausgeführt wird.

15. Verfahren nach Anspruch 14, **dadurch gekennzeichnet, dass** auf die nach der Feueraluminierung erhaltene Schutzschicht eine Zinkschicht aufgebracht wird.

16. Verfahren nach einem der voranstehenden Ansprüche, **dadurch gekennzeichnet, dass**
die Schmelztauchbeschichtung im Durchlauf absolviert wird.

17. Verfahren nach einem der voranstehenden Ansprüche, **dadurch gekennzeichnet, dass** das Stahlflachprodukt (in Gew.-%) C: ≤ 1,6 %, Mn: 6 - 30 %, Al: ≤ 10 %, Ni: ≤ 10 %, Cr: ≤ 10 %, Si: ≤ 8 %, Cu: ≤ 3 %, Nb: ≤ 0,6 %, Ti: ≤ 0,3 %, V: ≤ 0,3 %, P: ≤ 0,1 %, B: ≤ 0,01 %, N: ≤ 1,0 %, Rest Eisen und unvermeidbare Verunreinigungen enthält.

18. Verfahren nach Anspruch 17, **dadurch**
**gekennzeichnet, dass** das Stahlflachprodukt (in Gew.-%) C: ≤ 1,00 %, Mn: 20,0 - 30,0 %, Al: ≤ 0,5 %, Si: ≤ 0,5 %, B: ≤ 0,01 %, Ni: ≤ 3, 0 %, Cr: ≤ 10,0 %, Cu: ≤ 3,0 %, N: < 0, 6 %, Nb: < 0,3 %, Ti: < 0,3 %, V: < 0,3 %, P: < 0,1 %, Rest Eisen und unvermeidbare Verunreinigungen enthält.

19. Verfahren nach einem der Ansprüche 1 bis 16,
**dadurch gekennzeichnet, dass** das Stahlflachprodukt (in Gew.-%): C: ≤ 1,00 %, Mn: 7,00 - 30,00 %, B: < 0,01 %, Ni: < 8,00 %, Cu: < 3,00 %, N: < 0,60 %, Nb: < 0,30 %, Ti: < 0,30 %, V: < 0,30 %, P: < 0,01 %, sowie Al: 1,00 - 10,00 % und Si: > 2,50 - 8,00 %, mit der Maßgabe Al-Gehalt + Si-Gehalt > 3,50 - 12,00 %, Rest Eisen und unvermeidbare Verunreinigungen enthält.

## Claims

1. Method for coating a hot-rolled or cold-rolled steel flat product, containing 6 - 30 % wt. Mn, with a metallic protective layer by hot-dip coating in a melt bath, wherein the steel flat product is subjected to pickling treatment before entering the melt bath, in which the steel flat product is exposed to at least two pickling baths, and wherein the pickling baths in each case contain 20 - 200 g/l of hydrochloric acid and optionally 10 - 200 g/l Fe, **characterised in that** the acid concentration of the second pickling bath is higher than the acid concentration of the first pickling bath.

2. Method according to Claim 1, **characterised in that** the pickling treatment is completed in the pass.

3. Method according to Claim 2, **characterised in that** the dwell time of the steel flat product in the pickling bath is 5 - 60 seconds per unit of length.

4. Method according to any one of the preceding claims, **characterised in that** the temperature of the pickling bath is 40 - 90 °C.

5. Method according to any one of the preceding claims, **characterised in that** the steel flat product is dried before entering the melt bath.

6. Method according to any one of the preceding claims, **characterised in that** the steel flat product is heated to a bath-entry temperature before entering the melt bath.

7. Method according to Claim 6, **characterised in that** the steel flat product when heating to the bath-entry temperature is firstly heated up to a peak heating temperature which is above the bath-entry temperature and is subsequently cooled from the peak heating temperature to the bath-entry temperature.

8. Method according to Claim 7, **characterised in that** the surface temperature during heating does not exceed 700 °C .

9. Method according to any one of the preceding claims, **characterised in that** heating to the bath-entry temperature takes place under a protective atmosphere protecting the surface of the steel flat product from oxidation.

10. Method according to Claim 9, **characterised in that** the protective atmosphere is formed from nitrogen and 5 - 30 % vol. hydrogen.

11. Method according to Claim 10, **characterised in that** the dew point of the protective atmosphere is -50 °C to -15 °C.

12. Method according to any one of the preceding claims, **characterised in that** the steel flat product is cold-rolled and subjected to re-crystallising annealing before the pickling treatment.

13. Method according to any one of the preceding claims, **characterised in that** the hot-dip coating is carried out as hot-dip galvanizing.

14. Method according to any one of Claims 1 to 12,
**characterised in that** the hot-dip coating is carried out as hot-dip aluminizing.

15. Method according to Claim 14, **characterised in that** a zinc layer is applied onto the protective layer obtained after hot-dip aluminizing.

16. Method according to any one of the preceding claims, **characterised in that** the hot-dip coating is completed in the pass.

17. Method according to any one of the preceding claims, **characterised in that** the steel flat product contains (in % wt.) C: ≤ 1.6 %, Mn: 6 - 30 %, Al: ≤ 10 %, Ni: ≤ 10 %, Cr: ≤ 10 %, Si: ≤ 8 %, Cu: ≤ 3 %, Nb: ≤ 0.6 %, Ti: ≤ 0.3 %, V: ≤ 0.3 %, P: ≤ 0.1 %, B: ≤ 0.01 %, N: ≤ 1.0 %, the remainder being iron and unavoidable impurities.

18. Method according to Claim 17, **characterised in that** the steel flat product contains (in % wt.) C: ≤ 1.00 %, Mn: 20.0 - 30.0 %, Al: ≤ 0.5 %, Si: ≤ 0.5 %, B: ≤ 0.01 %, Ni: ≤ 3.0 %, Cr: ≤ 10.0 %, Cu: ≤ 3.0 %, N: < 0.6 %, Nb: < 0.3 %, Ti: < 0.3 %, V: < 0.3 %, P: < 0.1 %, the remainder being iron and unavoidable impurities.

19. Method according to any one of Claims 1 to 16,
**characterised in that** the steel flat product contains (in % wt.) C: ≤ 1.00 %, Mn: 7.00 - 30.00 %, B: < 0.01 %, Ni: < 8.00 %, Cu: < 3.00 %, N: < 0.60 %, Nb: < 0.30 %, Ti: < 0.30 %, V: < 0.30 %, P: < 0.01 %, as well as Al: 1.00 - 10.00 % and Si: > 2.50 - 8.00 %, with the proviso that Al content + Si content > 3.50 - 12.00 %, the remainder being iron and unavoidable impurities.

## Revendications

1. Procédé pour appliquer une couche de protection métallique sur un produit plat en acier laminé à chaud ou à froid contenant 6 - 30% en poids de Mn par immersion à chaud dans un bain en fusion, où le produit plat en acier est soumis à un traitement dans un bain de décapage avant l'entrée de celui-ci dans le bain en fusion, lors de ce traitement le produit plat en acier est soumis à au moins deux bains de décapage qui contiennent chacun 20 - 200 g/l d'acide chlorhydrique ainsi que, en option, 10 - 200 g/l Fe, **caractérisé en ce que** la concentration d'acide du deuxième bain de décapage est supérieure à celle du premier bain de décapage.

2. Procédé selon la revendication 1, **caractérisé en ce que** le traitement dans un bain de décapage se déroule en un cycle continu.

3. Procédé selon la revendication 2, **caractérisé en ce que** la durée du passage du produit plat en acier dans le bain de décapage est de 5 - 60 secondes par unité de longueur.

4. Procédé selon une des revendications précédentes,
**caractérisé en ce que** la température du bain de décapage est de 40 - 90 °C.

5. Procédé selon une des revendications précédentes, **caractérisé en ce que** le produit plat en acier est séché avant son entrée dans le bain en fusion.

6. Procédé selon une des revendications précédentes, **caractérisé en ce que** le produit plat en acier est réchauffé, avant son entrée dans le bain en fusion, à hauteur de la température à l'entrée du bain.

7. Procédé selon la revendication 6, **caractérisé en ce que** le produit plat en acier lors du réchauffement à hauteur de la température à l'entrée du bain est tout d'abord réchauffé à hauteur d'une température de pointe de réchauffement qui est supérieure à la température à l'entrée du bain, et est par la suite refroidi en passant de la température de pointe de réchauffement à la température à l'entrée du bain.

8. Procédé selon la revendication 7, **caractérisé en ce que** la température de surface lors du réchauffement ne dépasse pas les 700 °C.

9. Procédé selon une des revendications précédentes,
**caractérisé en ce que** le réchauffement à hauteur de la température à l'entrée du bain se situe sous une atmosphère protectrice protégeant la surface du produit plat en acier de l'oxydation.

10. Procédé selon la revendication 9, **caractérisé en ce que** l'atmosphère protectrice est formé à base d'azote et de 5 - 30 % en volume d'hydrogène.

11. Procédé selon la revendication 10, **caractérisé en ce que** le point de rosée de l'atmosphère protectrice est de -50 °C à -15 °C.

12. Procédé selon une des revendications précédentes,
**caractérisé en ce que** le produit plat en acier est laminé à froid et est soumis à un recuit de recristallisation avant le traitement de décapage.

13. Procédé selon une des revendications précédentes,
**caractérisé en ce que** le revêtement par immersion à chaud est exécuté en tant que galvanisation par immersion à chaud.

14. Procédé selon une des revendications de 1 à 12,
**caractérisé en ce que** le revêtement par immersion à chaud est exécuté en tant qu'aluminiurisation à chaud.

15. Procédé selon la revendication 14, **caractérisé en ce qu'**une couche de zinc est appliquée sur la couche protectrice étant obtenue après aluminiurisation à chaud.

16. Procédé selon une des revendications précédentes,
**caractérisé en ce que** le revêtement par immersion à chaud se déroule en un cycle continu.

17. Procédé selon une des revendications précédentes,
**caractérisé en ce que** le produit plat en acier contient (en % en poids) : C : ≤ 1,6 %, Mn: 6 - 30 %, Al : ≤ 10 %, Ni : ≤ 10 %, Cr : ≤ 10 %, Si : ≤ 8 %, Cu : ≤3 %, Nb : ≤ 0,6 %, Ti : ≤ 0,3 %, V : ≤ 0,3 %, P : ≤ 0,1 %, B : ≤ 0,01 %, N : ≤ 1,0 %, le reste étant du fer et des impuretés inévitables.

18. Procédé selon la revendication 17, **caractérisé en ce que** le produit plat en acier contient (en % en poids) : C : ≤ 1,00 %, Mn : 20,0 - 30,0 %, Al : ≤ 0,5 %, Si : ≤ 0,5 %, B : ≤ 0,01 %, Ni : ≤ 3,0 %, Cr : ≤ 10,0 %, Cu : ≤ 3,0 %, N : < 0,6 %, Nb : < 0,3 %, Ti : < 0,3 %, V : < 0, 3 %, P : < 0,1 %, le reste étant du fer et des impuretés inévitables.

19. Procédé selon une des revendications de 1 à 16,
**caractérisé en ce que** le produit plat en acier contient (en % en poids) : C : < 1,00 %, Mn : 7,00 - 30,00 %, B : < 0,01 %, Ni : < 8,00 %, Cu : < 3,00 %, N : < 0,60 %, Nb : < 0,30 %, Ti : < 0,30 %, V : < 0,30 %, P : < 0,01 %, ainsi que Al : 1,00 - 10,00 % et Si : > 2,50 - 8,00 %, sous réserve que la teneur en Al + la teneur en Si > 3,50 - 12,00 %, le reste étant du fer et des impuretés inévitables.
